# EUROPÄISCHE PATENTANMELDUNG

(11) **EP 0 567 760 A1**
(43) Veröffentlichungstag der Anmeldung: **03.11.1993**
(21) Anmeldenummer: 93104442.4
(22) Anmeldetag: 18.03.1993
(51) Int. Cl.: B02C 15/16

(54) **Verfahren und Vorrichtung zum Zerkleinern von Gummibrocken**

(30) Priorität: 25.04.1992 DE 4213608
(71) Anmelder: PAUL TROESTER MASCHINENFABRIK, D-30519 Hannover (DE)
(72) Erfinder: Lozhechnikov, Yevgenity, Prof. Dr., Minsk By (RU); Schmidt, Karl Heinz, Dipl.-Ing., W-3005 Hemmingen 4 (DE); Gohlisch, Hans Joachim, Dipl.-Ing., W-3000 Hannover 81 (DE); Seidler, Ekkehard, Dipl.-Ing., W-3000 Hannover (DE)
(74) Vertreter: Junius, Walther, Dr.

(57) **Zusammenfassung**

Die Erfindung betrifft ein Verfahren und eine Vorrichtung zum Zerkleinern von Gummibrocken mittels zweier liegend angeordneter Walzen (1,2). Es ist die Aufgabe der Erfindung, mit einfachen Mitteln unter verringertem Energieaufwand Gummibrocken zu einem mehlartigen Pulver zu zerreiben. Die Erfindung besteht darin, daß man die Gummibrocken in den Spalt zwischen zwei ineinander exzentrisch gelagerten Walzen (1,2) einbringt, daß man die Walzen mit ungleicher Umfangsgeschwindigkeit und/oder Drehrichtung rotieren läßt, und daß man dabei die Gummibrocken zerquetscht und zerreibt.

## Beschreibung

Die Erfindung betrifft ein Verfahren und eine Vorrichtung zum Zerkleinern von Gummibrocken mittels zweier liegend angeordneter Walzen.

Die Entsorgung von Altgummireifen ist ein schwer lösbares Problem. Zum einen bereitet es erhebliche Schwierigkeiten, die im Gummi des Reifens eingelagerten Metallteile vom Gummi zu trennen, bevor dieses durch Zerkleinerungsmaschinen läuft, zum anderen bestehen Möglichkeiten der Wiederverwendung von Gumminur dann, wenn das Gummiin sehr verteilter Form praktisch pulverförmig vorliegt, weil nur in dieser Form Altgum-mi als Zuschlagstoff von der Gummiindustrie für die Produktion neuer Gummiwaren wiederverwertet werden kann.

Um die Altgummireifen zu zerkleinern, setzt man schneidende und spanende Werkzeuge ein. Gemäß der DE 29 11 251 C2 wird der Reifen in einer Einspannvorrichtung mit drei nach außen verschiebbaren Zapfen aufgenommen, sodann wird mit rotierenden Scheibenmessern ein tangentialer Schnitt vorgenommen und die Lauffläche mit den Seitenstreifen von den die metallischen Einlagen vorzugsweise enthaltenden, an den Felgen anliegenden Wülsten abgeschnitten und nachfolgend durch weitere kreisscheibenförmige Messer in Streifen zerschnitten und dann einer Querschneidevorrichtung zugeführt. Die hierbei erhaltenen Gummibrocken bedürfen weiterer Zerkleinerung.

Andere, den Altgummireifen abbauende Maschinen sind die Shredder, welche mit rotierenden Messerwalzen am Umfang des Laufstreifens angreifen und den Laufstreifen sowie die Seitenstreifen zu Chips zerkleinern (US 36 93 894 A1). In ähnlicher Weise arbeitet eine Maschine nach der SU 13 88 294 A1, wobei hier der Reifen durch beidseitig an den Seitenstreifen angreifende Schalen eingespannt und gepreßt wird, wodurch der Laufstreifen gebogen und verformt wird und in diesem schmaleren Zustand den Messern einer Shredderwalze zugeführt wird. Ähnlich erfolgt die Zerkleinerung in der Zerkleinerungsmaschine nach der DE 37 04 725 A1, in welcher die auf rotierenden Zerkleinerungswalzen angeordneten Zerkleinerungswerkzeuge Hartmetallplättchen sind und die Zerkleinerungswerkzeuge selbst in besonderer Form angeordnet sind.

Die bei allen diesen Zerkleinerungsverfahren erhaltenen Altgummistücke sind technisch noch nicht in der Gummiindustrie als Zuschlagstoffe wiederverwertbar. Denn die erhaltenen Gummibrocken sind so grob, von derart ungleichmäßiger Gestalt und inhomogen, daß ihre weitere Verarbeitung und Zerkleinerung große Schwierigkeiten bereitet.
Aus der DD 265 855 A1 ist eine Vorrichtung zum Zermahlen von Gummibekannt geworden, mit der derartige Brocken weiterverarbeitet werden können. Bei dieser bekannten Vorrichtung schließt sich an einen mit mehreren Arbeitsbereichen versehenen Extruder über ein radiales Ausgangsrohr eine Mühle mit zwei, einen kegelförmigen Mahlspalt einschließenden Mahlscheiben an. Unterschiedliche Bearbeitungszonen sind im Extruder durch verschiedene Gestaltungen von verschiedenen Schneckenabschnitten erreicht worden. Das an die Extrusion folgende Einbringen der gepreßten Gummibrocken in den Mahlspalt ist schwierig, das Zermahlen des Altgummis ist problematisch.

Denn Gummi ist ein äußerst schwer zu zerkleinerndes Material, das in vielerlei Hinsicht inhomogen ist: Durch unterschiedliche Sonnenbestrahlung und unterschiedliche Belastungen während der Laufdauer eines Automobilreifens sowie durch unterschiedliche Lebensalter ist der zu bearbeitende Altgummischrott unterschiedlich gealtert. Die Brocken des Altgummischrotts weisen stark gealterte Anteile auf, welche relativ leicht fein zu zerkleinern sind. Andere, weniger gealterte Teile hingegen weisen noch hohe Elastizitätseigenschaften auf und sind daher durch Zerreiben nicht oder nur äußerst schwierig zu zerkleinern. In den meisten Fällen hängen stark gealterte Bestandteile mit wenig gealterten Bestandteilen einstückig zusammen. Daher ergeben sich besondere Schwierigkeiten bei der Zerkleinerung. Diese Schwierigkeiten werden noch dadurch erhöht, daß sich Fremdstoffe in Form von Metallteilen im Gummischrott befinden, die sich vor dem Mahlvorgang nicht herauslösen lassen, weil sie teils von Gummi umgeben sind, teils das Gummi an ihnen anvulkanisiert ist. Diese Metallteile wirken zerstörend auf die Mahlscheiben ein.

Aber auch bei der Produktion fällt Gummischrott an, z.B. wenn durch irgendwelche Produktionsfehler oder Mischungsfehler oder durch die Verwendung ungeeigneter Mischungen Ausschußware erzeugt wird. Dieser Gummischrott ist schwer zu zerkleinern und zu zerreiben, weil seine elastischen Eigenschaften meist besser sind als die des Altgummis.

Die vorliegende Erfindung vermeidet die Nachteile des Standes der Technik. Es ist die Aufgabe der Erfindung, mit einfachen Mitteln unter verringertem Energieaufwand Gummibrocken zu einem mehlartigen Pulver zu zerrei-ben.

Die Erfindung besteht darin, daß man die Altgummibrocken in den Spalt zwischen zwei ineinander exzentrisch gelagerten Walzen einbringt, daß man die Walzen mit ungleicher Umfangsgeschwindigkeit und/oder Drehrichtung rotieren läßt, und daß man dabei die Gummibrocken zerquetscht und zerreibt.

Auf diese Weise gelingt es mit relativ geringem maschinellen und energetischen Aufwand Gummibrocken zu feinem Pulver zu zerquetschen und zu zerreiben, ohne daß die in den Gummibrocken noch vorhandenen Metall-teile größere Schäden durch Verschleiß an den Walzen anrichten.

Zweckmäßigerweise nimmt man diesen Vorgang des Zerquetschens und Zerreibens in mehreren nacheinander folgenden Stufen dadurch vor, daß man diesen Vorgang des Zerreibens und Zerquetschens mehrmals, vorzugsweise zwischen Walzenpaaren unterschiedlich eingestellter Spaltweiten und/oder unterschiedlicher Antriebsdaten (Drehgeschwindigkeiten und Drehrichtungen), wiederholt.

Besonders vorteilhaft ist es, wenn man den Altgummibrocken eine axiale Bewegung im Spalt zwischen den Walzen aufzwingt und somit das Zerreiben nicht nur in Umfangsrichtung, sondern auch in Axialrichtung vornimmt.

Eine leichte Schrägstellung der Innenwalze gegenüber dem Hohlzylinder eventuell bei Verwendung einer balligen Innenwalze kann den erreichbaren Effekt des Zerreibens wirkungsvoll verbessern.

Vorteilhaft ist es, wenn man die Hohlwalze mit hoher Drehgeschwindigkeit umlaufen läßt, um hohe Zentrifugalkräfte zum Einschleppen des zu zerkleinernden Materials in den Spalt zu erreichen. Gleichzeitig kann man hierdurch auch hohe Relativgeschwindigkeiten zwischen den Walzen erzielen und dadurch besonders wirkungsvoll zerkleinern, denn bei hohen Stoßgeschwindigkeiten werden die elastischen Eigenschaften des Gummis nicht oder nur in geringem Maße wirksam.

Es kann aber auch die ganze Vorrichtung für eine einstellbare Schrägstellung konstruiert sein. Eine Schrägstellung der ganzen Vorrichtung bringt den Vorteil eines verbesserten Durchlaufs der Gummiteile durch die Vorrichtung nach mehrmaligem Passieren des Walzenspaltes. Durch den Grad der Schrägstellung kann man die Wanderungsgeschwindigkeit der Gummiteile einstellen und auch die statistische mittlere Anzahl der Durchgänge der wandernden Teile durch den Spalt einstellen.

Die für dieses Verfahren zum Zerkleinern von Altgummibrocken benutzte Vorrichtung zeichnet sich dadurch aus, daß zumindest die eine Walze eine Hohlwalze ist, in deren Innenraum die andere Walze exzentrisch gelagert ist, daß Antriebsmittel für den Antrieb der Walzen mit ungleicher Umfangsgeschwindigkeit und/oder Drehrichtung vorgesehen sind, daß Mittel zum Einbringen der Altgummibrocken in den Spalt zwischen den beiden Walzen vorgesehen sind, und daß zumindest eine Öffnung zum Herauslassen des zerriebenen Gutes vorgesehen ist. Diese Vorrichtung läßt sich in sehr robuster Form mit einfachen Mitteln aufbauen. Sie weist bei einer hervorragenden Zerkleinerungswirkung eine lange Lebensdauer auf.

Konstruktiv ist es zweckmäßig, wenn die Hohlwalze mit ihrem Außenumfang auf Rollen gelagert ist, die auf mindestens zwei Achsen verteilt sind.

Vorteilhaft für den Zerkleinerungsvorgang ist es, wenn die Achsen der Walzen einen spitzen Winkel miteinander und/oder mit der Horizontalen einschließen. Dieses ist insbesondere dann von großem Vorteil, wenn Arbeitsmittel vorgesehen sind, die zerkleinerte Altgummistücke um die innere Walze herum erneut in den Verarbeitungsspalt einschleppen. Solche Mittel können z.B. im Spalt in Ebenen senkrecht zu einer Walzenachse stehende Scheibensegmente sein, welche ein Weiterwandern der durch den Spalt durchgetretenen Teile zum Ausgang hin behindern.

Baulich läßt sich diese Vorrichtung in einfacher Weise realisieren, wenn die Stirnseiten der Hohlwalze an feststehende Schilde angrenzen. Hierdurch wird ein Austritt des sich in der Vorrichtung bildenden Altgummipulvers verhindert.

Besonders vorteilhaft ist es, wenn mehrere Walzenpaare hinter und/oder übereinander und versetzt zueinander angeordnet sind, von denen jeweils der Ausgang des einen Paares an den Eingang des folgenden Paares angeschlossen ist. Hierbei weisen zweckmäßigerweise die Walzenpaare unterschiedliche Spaltweiten auf, so daß der Zerkleinerungsvorgang in mehreren Stufen hintereinander ausgeführt wird.

Vorteilhaft ist es weiterhin, wenn die innere Oberfläche der Hohlwalze und/oder die Außenoberfläche der in der Hohlwalze gelagerten Walze mit Noppen, Vorsprüngen, Stiften, Einkerbungen, Reißzähnen oder dergleichen besetzt ist oder aufgerauht ist. Das könnte vor allem in einigen Walzenumfangsbereichen von Vorteil sein. Hierdurch kann der Zerkleinerungsvorgang erheblich beschleunigt werden.

Wegen ihrer Elastizität sehr schwer zu zerkleinernde Altgummistücke lassen sich vorteilhaft in einer Vorrichtung zerkleinern, bei der zumindest die Oberfläche der einen Walze mit einem Gewinde versehen ist, welches einerseits den Zerreibevorgang sich nicht nur in Umfangsrichtung, sondern auch in Axialrichtung abspielen läßt und andererseits den Weg für die Gummibrocken im Spalt vergrößert.

Zweckmäßigerweise wird man jeder Zerkleinerungsvorrichtung eine Sortiervorrichtung nachschalten, in welcher die bereits auf die gewünschte Teilchengröße zerkleinerten Teile von den gröberen Teilen getrennt werden, die dann zweckmäßig durch eine nachgeschaltete Rückführvorrichtung dem Arbeitsprozeß noch einmal zugeführt werden oder an eine nachfolgende Bearbeitungsstufe weitergeleitet werden.

Eine besonders wirkungsvolle Abführung fein und feinst zerkleinerter Gummiteilchen ist durch Absaugung oder pneumatisches Herausblasen aus dem Innenraum der Vorrichtung möglich. Anschließend fängt man diesen Gummistaub in Staubfängern, z.B. Windsichtern auf.

Das Wesen der Erfindung ist nachstehend anhand eines in der Zeichnung schematisch dargestellten Ausführungsbeispieles näher erläutert. Es zeigen:
- Fig. 1: in perspektivischer Ansicht die Anordnung der beiden Walzen ineinander,
- Fig. 2: einen Schnitt durch die Walzenanordnung,
- Fig. 3: einen Querschnitt durch die Vorrichtung,
- Fig. 4: die Anordnung mehrerer Vorrichtungen hintereinander zur stufenweisen Zerkleinerung der Gummibrocken.
- Fig.5: eine Ausführungsform mit einseitig gelagerter verschwenkbarer Innenwalze
- Fig.6: eine Ausführungsform mit verschwenkbarem Gehäuse
- Fig.7: einen Schnitt durch die Vorrichtung der Fig.6
In der Hohlwalze 1 ist die Walze 2 exzentrisch gelagert. Die Achse 3 der Walze 2 ist gegenüber der Achse 4 der Hohlwalze 1 ein Stück versetzt und verstellbar, so daß sich der Zwischenraum zwischen den beiden Walzen 1, 2 an einer Stelle zu einem in seiner Spaltweite einstellbaren Spalt 5 verengt. Dadurch, daß sich beide Walzen in gleicher Richtung drehen, werden die Gummibrocken 6 in dem Walzenspalt zermahlen und zerrieben. Teilweise wandert das zermahlene und zerriebene Material hinter dem Spalt in Achsrichtung weiter, insbesondere dann, wenn die Walzenachsen 3,4 mit der Horizontalen einen spitzen Winkel einschließen. Teilweise wird das zerkleinerte Material von der inneren Walze 2 mitgeschleppt, fällt auf die unten in der Hohlwalze 1 liegenden Gummibrocken und wird erneut durch den Walzenspalt mitgeschleppt.

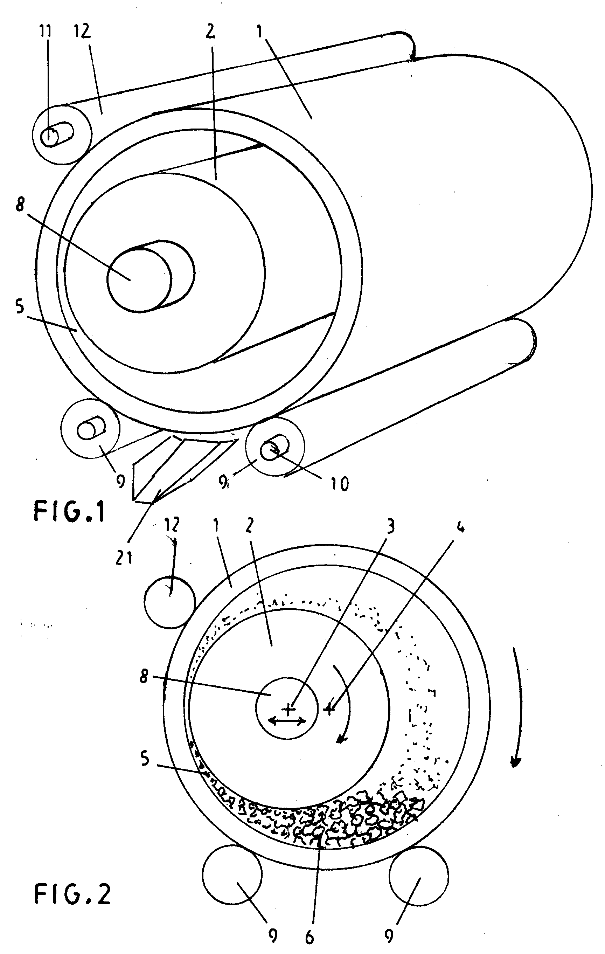

Besonders vorteilhaft ist es, wenn die Achsen 3, 4 der Walzen 1,2 so angeordnet sind, wie die Fig. 1 und 2 es zeigen, nämlich derart, daß die Enden der Achsen auf genähert horizontalen Linien liegen, auf denen dann auch die engste Stelle des Walzenspaltes befindlich ist.

Die Hohlwalze 1 und die in ihr angeordnete Walze 2 sind in einem Gehäuse 7 untergebracht, durch welches sich die Welle 8 erstreckt, auf der die Walze 2 gelagert ist. Die Hohlwalze 1 ist auf Rollen 9 gelagert, die auf Wellen 10 befestigt sind, von denen mindestens eine der Wellen 10 angetrieben ist. Zusätzlich ist eine Welle 11 mit Abstützrollen 12 vorgesehen, damit die in den Walzenspalt 5 hineingezogenen Gummibrocken die Lage der Achse 4 der Hohlwalze 1 während des Betriebes nicht verschieben können.

Der Antrieb dieser Vorrichtung erfolgt vom Motor 13 über ein Getriebe 14, welches mittels der Zahnräder 15, 16 sowohl für einen Antrieb der Welle 10 als auch für einen Antrieb der Welle 8 Sorge trägt.

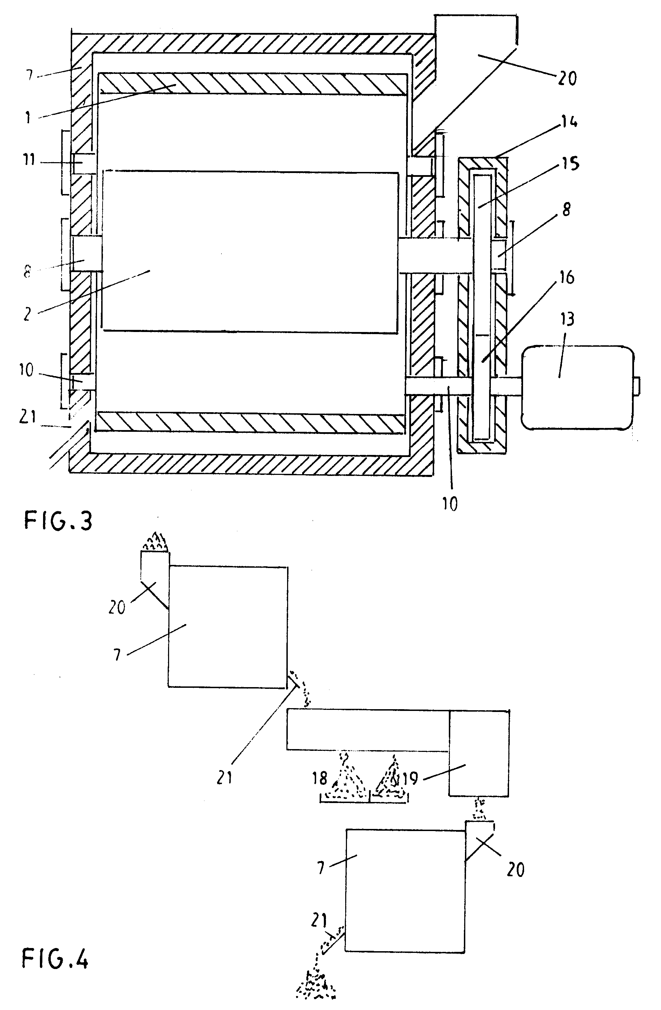

Im Ausführungsbeispiel der Fig. 4 sind mehrere Vorrichtungen 7 hintereinandergeschaltet. Hinter jeder Vorrichtung ist eine Sortieranlage 18, die mit Sieben und/oder Sichtern arbeitet, angeordnet. Diesen Sortieranlagen 18 kann jeweils eine Behandlungsanlage 19 nachgeschaltet sein, in welcher die Gummibrocken chemischen Einwirkungen oder Strahleneinwirkungen ausgesetzt sind, die eine rasche Alterung der eingetragenen Gummibrocken bewirken.

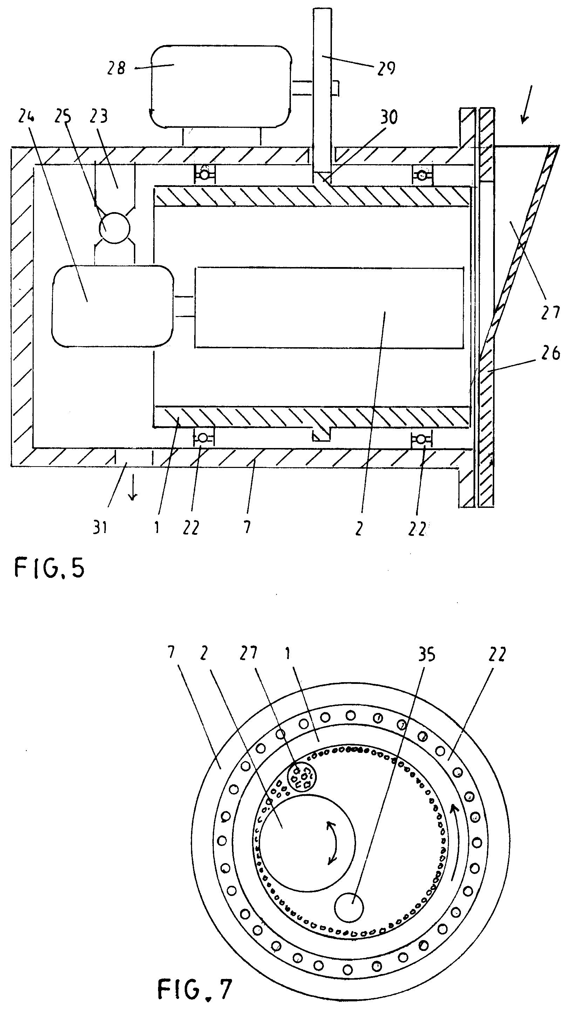

Im Ausführungsbeispiel der Fig 5 ist die Hohlwalze 1 in zwei Wälzlagern 22 gelagert, die im Gehäuse 7 mit ihren Außenringen fest eingebaut sind. In das Gehäuse 7 ist eine zweiteilige Halterung 23 für den Antriebsmotor 24 eingebaut. Der Antriebsmotor trägt die einseitig gelagerte, leicht ballig ausgeführte Walze 2 und treibt sie an. Für eine verschwenkbare Einstellung der Achse der Walze 2 ist zwischen den beiden teilen der Halterung 23 ein Kugelgelenk 25 eingebaut. Eingangsseitig ist das Gehäuse 7 durch eine Stirnplatte 26 abgeschlossen, in die der Beschickungstrichter 27 eingebaut ist. Die Hohlwalze 1 wird mittels des Motors 28 über ein Zahnradgetriebe 29,30 angetrieben. Das zerkleinerte Mahlgut verläßt durch die Ausgangsöffnung 31 das Gehäuse 7. Das Mahlgut wandert vom Beschickungstrichter 27 zur Ausgangsöffnung 31 und wird auf dieser Wanderung immer wieder von der Innenwand der Hohlwalze 1 in den Spalt zwischen Hohlwalze 1 und Innenwalze 2 mitgenommen und in diesem Spalt zu immer kleineren Teilchen zerrieben.

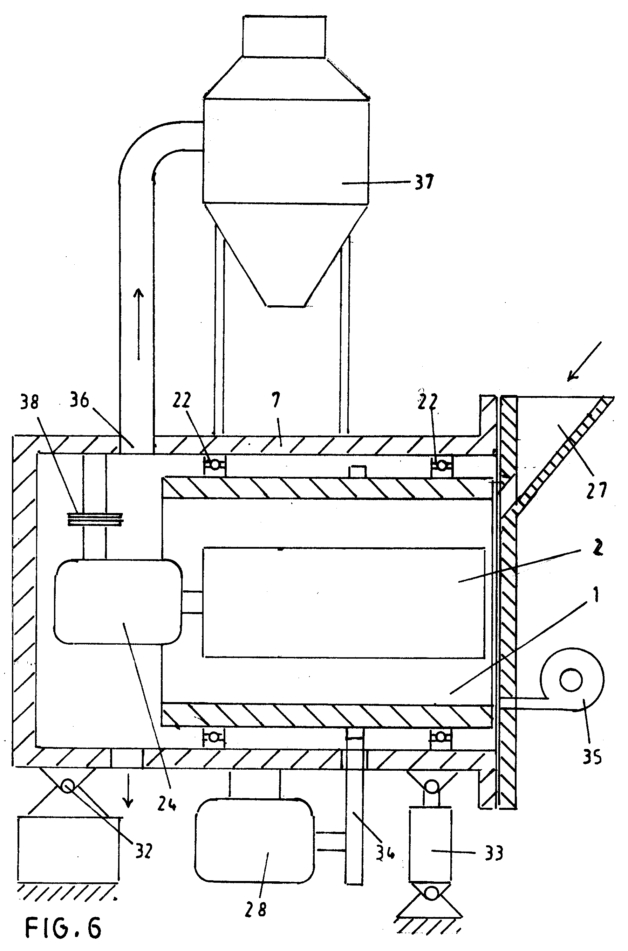

Im Ausführungsbeispiel der Fig.6 ist das Gehäuse um das Gelenk 32 verschwenkbar angeordnet, es kann mittels des hydraulischen Servomotors 33 durch Heben oder Senken des Eingangsteiles in verschiedene Höhen in verschiedene Schräglagen verstellt werden. Dadurch kann die Durchlaufzeit für das zu verarbeitende Material variiert werden.

Der Antrieb der Hohlwalze 1 erfolgt hier vom Motor 28 über den Kettentrieb 34.

Unterhalb des Beschickungstrichters 27 ist hier ein Gebläse 35 angeordnet, mit dessen Hilfe der Feinstaub aus der Staubauslaßöffnung 36 zu einem Abscheidezyklon 37 abgeführt wird.- Wie Fig.7 zeigt, erfolgt hier die Befüllung durch den Beschickungstrichter 27 derart, daß die zu zerkleinernden Brocken oberhalb des Spaltes 5 liegen und unterhalb der Innenwalze 2 sich nur Material befindet, das mindestens einmal durch den Spalt 5 hindurchgegangen ist.

Die zweiteilige Halterung der Fig.6 weist einen Drehschemel 38 als Verschwenkvorrichtung für die Walze 2 mit ihrem Antriebsmotor 24 auf.

| **Liste der Bezugszeichen:** | | | |
|---|---|---|---|
| 1 | Hohlwalze | 31 | Ausgangsöffnung |
| 2 | Walze | 32 | Gelenk |
| 3 | Achse | 33 | Servomotor |
| 4 | Achse | 34 | Kettentrieb |
| 5 | Spalt | 35 | Gebläse |
| 6 | Gummibrocken | 36 | Staubauslaßöffnung |
| 7 | Gehäuse | 37 | Zyklon |
| 8 | Welle | 38 | Drehschemel |
| 9 | Rollen | | |
| 10 | Welle | | |
| 11 | Welle | | |
| 12 | Abstützrolle | | |
| 13 | Motor | | |
| 14 | Getriebe | | |
| 15 | Zahnrad | | |
| 16 | Zahnrad | | |
| 17 | Vorrichtung | | |
| 18 | Sortieranlage | | |
| 19 | Behandlungsanlage | | |
| 20 | Speisetrichter | | |
| 21 | Auslaßöffnung | | |
| 22 | Lager | | |
| 23 | Halterung | | |
| 24 | Motor | | |
| 25 | Kugelgelenk | | |
| 26 | Stirnplatte | | |
| 27 | Beschickungstrichter | | |
| 28 | Motor | | |
| 29 | Zahnrad | | |
| 30 | Zahnrad | | |

## Patentansprüche

1. Verfahren zum Zerkleinern von Gummibrocken, mittels zweier liegend angeordneter Walzen, dadurch gekennzeichnet,
daß man die Gummibrocken in den Spalt zwischen zwei ineinander exzentrisch gelagerten Walzen einbringt,
daß man die Walzen mit ungleicher Umfangsgeschwindigkeit und/oder Drehrichtung rotieren läßt, und daß man dabei die Gummibrocken zerquetscht und zerreibt.

2. Verfahren nach Anspruch 1,
dadurch gekennzeichnet,
daß man diesen Vorgang des Zerreibens und Zerquetschens mehrmals vorzugsweise zwischen Walzenpaaren unterschiedlicher Spaltweiten und/oder unterschiedlicher Antriebsdaten wiederholt.

3. Verfahren nach Anspruch 1,
dadurch gekennzeichnet,
daß man den Gummibrocken eine axiale Bewegung im Spalt zwischen den Walzen aufzwingt.

4. Verfahren nach Anspruch 1,
dadurch gekennzeichnet,
daß man die liegenden Walzen in Schrägstellung gegenüber der Horizontalen anordnet.

5. Verfahren nach Anspruch 1,
dadurch gekennzeichnet,
daß man die Hohlwalze mit hoher Drehgeschwindigkeit umlaufen läßt.

6. Vorrichtung zum Zerkleinern von Gummibrocken, bestehend aus zwei liegend angeordneten Walzen,
dadurch gekennzeichnet,
daß zumindest die eine Walze (1) eine Hohlwalze ist, in deren Innenraum die andere Walze (2) exzentrisch gelagert ist,
daß Mittel (20) zum Einbringen der Gummibrocken (6) in den Spalt (5) zwischen den beiden Walzen (1,2) vorgesehen sind,
und daß zumindest eine Öffnung (21) zum Herauslassen des zerriebenen Gutes vorgesehen ist.

7. Vorrichtung nach Anspruch 6,
dadurch gekennzeichnet,
daß Antriebsmittel (14,15,16) für den Antrieb der Walzen (1,2,) mit ungleicher Umfangsgeschwindigkeit und/oder Drehrichtung vorgesehen sind.

8. Vorrichtung nach Anspruch 6,
dadurch gekennzeichnet,
daß die Hohlwalze (1) mit ihrem Außenumfang auf Rollen (9) gelagert ist, die auf mindestens zwei Achsen (10) verteilt sind.

9. Vorrichtung nach Anspruch 6,
dadurch gekennzeichnet,
daß die Achsen der Walzen (1,2) einen spitzen Winkel miteinander und/oder mit der Horizontalen einschließen.

10. Vorrichtung nach Anspruch 6,
dadurch gekennzeichnet,
daß die Stirnseiten der Hohlwalze an feststehende Schilde des Gehäuses (7) angrenzen.

11. Vorrichtung nach Anspruch 6,
dadurch gekennzeichnet,
daß mehrere Walzenpaare (1,2) hinter und/oder übereinander und versetzt zueinander angeordnet sind, von denen jeweils der Ausgang des einen Paares (1,2) an den Eingang des folgenden Paares (1,2) angeschlossen ist.

12. Vorrichtung nach Anspruch 6,
dadurch gekennzeichnet,
daß die innere Oberfläche der Hohlwalze (1) und/oder die Außenoberfläche der in der Hohlwalze (1) gelagerten Walze (2) glatt ist oder, vorzugsweise in Teilbereichen, mit Noppen, Vorsprüngen, Stiften, Einkerbungen, Reißzähnen oder dergleichen besetzt ist oder aufgerauht ist.

13. Vorrichtung nach Anspruch 6,
dadurch gekennzeichnet,
daß zumindest die Oberfläche der einen Walze (1,2) mit einem Gewinde, vorzugsweise einem mehrgängigen Gewinde versehen ist.,
wobei die auf den beiden Walzen 1,2 angeordneten Gewinde vorzugsweise gegenläufig sind.

14. Vorrichtung nach Anspruch 6,
gekennzeichnet durch
eine nachgeschaltete Sortiervorrichtung (18) und/oder eine nachgeschaltete Rückführvorrichtung.

15. Vorrichtung nach Anspruch 6,
dadurch gekennzeichnet,
daß die Achsen (3,4) der Hohwalze (1) und der Walze (2) sowie der Spalt (5) in Radialebenen horizontal oder genähert horizontal befindlich sind.

16. Vorrichtung nach Anspruch 7,
gekennzeichnet
durch Abstützrollen (12), die auf einer Welle (11) gelagert sind und oberhalb der Rollen (9) angeordnet sind.

17. Vorrichtung nach Anspruch 6,
dadurch gekennzeichnet,
daß die Walzenachsen unter einem spitzen Winkel gegenüber der Horizonzalen und/oder gegenüber einander angeordnet sind.

18. Vorrichtung nach Anspruch 17,
dadurch gekennzeichnet,
daß die innere Walze (2) ballig ausgeführt ist.

19. Vorrichtung nach Anspruch 6,
dadurch gekennzeichnet,
daß eine Vorrichtung für eine einstellbare Schrägstellung der gesammten Vorrichtung, des Gehäuses und/oder einer Walze gegenüber der anderen vorgesehen ist.

20. Vorrichtung nach Anspruch 6,
dadurch gekennzeichnet,
daß die Walze 2 an ihrem einen Ende fliegend gelagert ist.
